# EUROPÄISCHE PATENTSCHRIFT

(11) **EP 3 660 287 B1**
(45) Veröffentlichungstag und Bekanntmachung des Hinweises auf die Patenterteilung: **09.08.2023**
(21) Anmeldenummer: 19203973.3
(22) Anmeldetag: 18.10.2019
(51) Int. Cl.: F01N 3/035, F01N 3/10, F01N 3/20, F01N 5/04, F01N 9/00, F01N 13/00

(54) **ABGASNACHBEHANDLUNGSSYSTEM SOWIE VERFAHREN ZUR ABGASNACHBEHANDLUNG EINES VERBRENNUNGSMOTORS**
EXHAUST GAS AFTERTREATMENT SYSTEM AND METHOD FOR TREATING THE WASTE GAS OF A COMBUSTION ENGINE
SYSTÈME DE POST-TRAITEMENT DES GAZ D'ÉCHAPPEMENT AINSI QUE PROCÉDÉ DE POST-TRAITEMENT DES GAZ D'ÉCHAPPEMENT D'UN MOTEUR À COMBUSTION INTERNE

(30) Priorität: 30.11.2018 DE 102018220715
(43) Veröffentlichungstag der Anmeldung: 03.06.2020
(73) Patentinhaber: Volkswagen AG, 38440 Wolfsburg (DE)
(72) Erfinder: Kellner, Stephan, 38440 Wolfsburg (DE); Bunkus, Johannes, 38442 Wolfsburg (DE)

(56) Entgegenhaltungen:
- EP-A1- 2 826 971
- EP-A1- 3 073 083
- EP-A1- 3 111 066
- EP-B1- 3 111 066
- DE-A1-102009 023 550
- DE-A1-102014 017 789
- DE-A1-102017 201 401
- DE-A1-102018 107 548
- US-A1- 2009 031 702
- US-A1- 2014 363 358
- US-A1- 2018 078 898

## Beschreibung

Die Erfindung betrifft ein Abgasnachbehandlungssystem für einen Verbrennungsmotor, insbesondere für einen Dieselmotor, sowie ein Verfahren zur Abgasnachbehandlung eines solchen Verbrennungsmotors gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sich im Allgemeinen aus 32,5 % Harnstoff und 67,5 % Wasser zusammen.

Die zukünftige Abgasgesetzgebung erfordert es, bei Dieselmotoren mehrstufige Komponenten zur Nachbehandlung der Stickoxid-Emissionen einzusetzen. Die mehrstufige Abgasnachbehandlung ist notwendig, um in allen Temperaturbereichen eine hinreichende Konvertierung der Schadstoffe zu erzielen. So kann ein Abgasnachbehandlungssystem beispielsweise einen NOx-Speicherkatalysator, einen Partikelfilter mit einer Beschichtung zur selektiven katalytischen Reduktion von Stickoxiden und einen weiteren SCR-Katalysator in einer Unterbodenlage des Kraftfahrzeuges aufweisen. Um eventuelle Durchbrüche von Ammoniak durch den SCR-Katalysator zu eliminieren und das Ammoniak zu oxidieren, kann stromabwärts des letzten SCR-Katalysators ein Ammoniak-Sperrkatalysator vorgesehen sein. Dabei müssen die entsprechenden Komponenten zur Abgasnachbehandlung auf eine Betriebstemperatur aufgeheizt werden, um zeitnah nach einem Kaltstart des Verbrennungsmotors, unabhängig vom Motorbetriebspunkt und der Entfernung der Abgasnachbehandlungskomponente vom Verbrennungsmotor eine Temperatur zu erreichen, bei der eine hinreichende Konvertierung von limitierten Abgaskomponenten erreicht wird. Ferner muss der Partikelfilter intermittierend regeneriert werden, wozu eine entsprechend hohe Abgastemperatur notwendig ist, um die im Partikelfilter zurückgehaltenen Rußpartikel zu oxidieren.

Aus der DE 10 2008 032 601 A1 ist ein Abgasnachbehandlungssystem für einen Verbrennungsmotor bekannt, in welchem ein Oxidationskatalysator, stromabwärts des Oxidationskatalysators ein NOx-Speicherkatalysator, stromabwärts des NOx-Speicherkatalysators ein SCR-Katalysator und weiter stromabwärts ein Partikelfilter angeordnet sind. Dabei ist stromabwärts des SCR-Katalysators und stromaufwärts des Partikelfilters eine Einleitstelle für ein heißes Abgas eines Abgasbrenners vorgesehen, um den Partikelfilter auf seine Regenerationstemperatur aufzuheizen.

Die DE 10 2016 205 182 A1 offenbart ein Abgasnachbehandlungssystem für einen Verbrennungsmotor mit einem katalytisch beschichteten Partikelfilter und einem NOx-Speicherkatalysator, wobei stromaufwärts des NOx-Speicherkatalysators ein Abgasbrenner vorgesehen ist, welcher mit einem unterstöchiometrischen Verbrennungsluftverhältnis betrieben wird, um eine Aufheizung des Abgases und gleichzeitige Regeneration des NOx-Speicherkatalysators mit den unverbrannten Kohlenwasserstoffen aus dem Brennerabgas zu ermöglichen.

Die EP 1 469 173 B1 offenbart ein Abgasnachbehandlungssystem für einen Verbrennungsmotor, bei welchem in Strömungsrichtung eines Abgases durch das Abgasnachbehandlungssystem ein Oxidationskatalysator, stromabwärts des Oxidationskatalysators ein SCR-Katalysator und weiter stromabwärts ein Partikelfilter angeordnet sind. Dabei sind stromabwärts des Oxidationskatalysators und stromaufwärts des SCR-Katalysators ein Wärmetauscher zum Abkühlen des Abgasstroms und stromabwärts des SCR-Katalysators und stromaufwärts des Partikelfilters ein Heizelement vorgesehen, um den Abgasstrom vor Eintritt in den Partikelfilter auf eine Regenerationstemperatur des Partikelfilters aufzuheizen.

Aus der US 2014 / 0 363 358 A1 ist ein Abgasnachbehandlungssystem für einen Verbrennungsmotor bekannt. Das Abgasnachbehandlungssystem umfasst einen ersten SCR-Katalysator und einen zweiten SCR-Katalysator, welcher in der Abgasanlage stromabwärts des ersten SCR-Katalysators angeordnet ist. Ein erstes Dosierventil ist stromaufwärts des ersten SCR-Katalysators und eine zweites Dosierventil stromaufwärts des zweiten SCR-Katalysators vorgesehen. Das Abgassystem umfasst ferner eine mit der ersten Dosierventil verbundene Zufuhrvorrichtung für gasförmiges Ammoniak und ein mit dem zweiten Dosierventil in Fluidverbindung stehendes Reservoir für ammoniakhaltiges Reduktionsmittel, um dem Abgas durch das zweite Dosierventil ein flüssiges, ammoniakhaltiges Reduktionsmittel, insbesondere wässrige Harnstofflösung, zuzuführen.

Die EP 2 826 971 A1 offenbart einen Dieselmotor mit einem Abgasnachbehandlungssystem, in welchem in Strömungsrichtung eines Abgasstroms des Dieselmotors ein motornaher erster SCR-Katalysator, stromabwärts des motornahen SCR-Katalysators ein Partikelfilter und stromabwärts des Partikelfilters ein weiterer SCR-Katalysator angeordnet sind. Die EP 2 826 971 A1 offenbart ferner ein Verfahren zur Verminderung von Stickoxiden in dieselmotorischen Abgasen mit einem solchen Abgasnachbehandlungssystem.

DE 10 2017 201 401 A1 beschreibt ein Abgasnachbehandlungssystem für eine Brennkraftmaschine mit mindestens einem ersten und einem zweiten Stickoxidspeicherkatalysator. Dabei ist der erste Stickoxidspeicherkatalysator innerhalb eines Niederdruck-Abgasrückführungskreislaufs angeordnet. Ferner offenbart die DE 10 2017 201 401 A1 ein Verfahren zum Betrieb des Abgasnachbehandlungssystems, wobei durch Bereitstellen von fetten Abgasbedingungen die Stickoxidspeicherkatalysatoren unter Betriebsbedingungen mit hoher Last zur Produktion von Ammoniak genutzt werden können.

Aus der DE 10 2009 023 550 A1 ist ein Abgasnachbehandlungssystem für einen Verbrennungsmotor bekannt, mit einer Vorrichtung zur Einbringung von Kohlenwasserstoffen in ein das Prozessabgas des Verbrennungsmotors führendes Abgasrohr. Dabei ist stromabwärts des Einbringungsortes eine von einem Abgasstrom des Verbrennungsmotors durchströmte, katalytisch beschichtete Behandlungseinrichtung angeordnet. Durch die Behandlungseinrichtung werden die Kohlenwasserstoffe zumindest teilweise verdampft sowie durch Crackreaktionen und/oder partielle Oxidation chemisch verändert.

Nachteilig an den bekannten Lösungen ist jedoch, dass bei einer motorfernen Position des SCR-Katalysators, insbesondere in einer Unterbodenlage eines Kraftfahrzeuges, externe Heizmaßnahmen notwendig sind, um den SCR-Katalysator zeitnah nach einem Kaltstart des Verbrennungsmotors auf seine Betriebstemperatur aufzuheizen. Dabei ist die Heizleistung eines elektrischen Heizelements durch die Leistung der Batterie begrenzt, welche bei tiefen Außentemperaturen, insbesondere Temperaturen unter 0°C ebenfalls eingeschränkt ist.

Der Erfindung liegt nun die Aufgabe zugrunde, ein schnelles Aufheizen zumindest eines SCR-Katalysators nach dem Kaltstart des Verbrennungsmotors zu ermöglichen und somit zeitnah nach dem Kaltstart eine effiziente Konvertierung von Stickoxiden zu ermöglichen.

Erfindungsgemäß wird diese Aufgabe durch ein Abgasnachbehandlungssystem für einen Verbrennungsmotor, umfassend eine Abgasanlage mit einem Abgaskanal, in welchem mindestens zwei Abgasnachbehandlungskomponenten zur selektiven, katalytischen Reduktion von Stickoxiden angeordnet sind, gelöst. Dabei ist die erste Abgasnachbehandlungskomponente zur selektiven, katalytischen Reduktion von Stickoxiden unmittelbar stromabwärts einer Turbine eines Abgasturboladers des Verbrennungsmotors angeordnet. Stromabwärts der ersten Abgasnachbehandlungskomponente zur selektiven, katalytischen Reduktion von Stickoxiden und stromaufwärts der zweiten Abgasnachbehandlungskomponente zur selektiven, katalytischen Reduktion von Stickoxiden ist ein mit einem Kraftstoff des Verbrennungsmotors betriebener Brenner vorgesehen, mit welchem das Abgas vor Eintritt in die zweite Abgasnachbehandlungskomponente zur selektiven, katalytischen Reduktion von Stickoxiden beheizbar ist. Stromabwärts der zweiten Abgasnachbehandlungskomponente zur selektiven, katalytischen Reduktion von Stickoxiden ist ein Oxidationskatalysator vorgesehen, um unverbrannte Kohlenwasserstoffe und Kohlenstoffmonoxid in Kohlenstoffdioxid und Wasserdampf zu konvertieren. Durch den Abgasbrenner kann die Abgasnachbehandlungskomponente zur selektiven, katalytischen Reduktion von Stickoxiden im Wesentlichen unabhängig vom Abgasstrom und der Abgastemperatur des Verbrennungsmotors beheizt werden, sodass insbesondere unmittelbar nach einem Kaltstart des Verbrennungsmotors ein deutlich schnelleres Aufheizen der Abgasnachbehandlungskomponente auf ihre Betriebstemperatur möglich ist. Somit kann bereits zeitnah nach dem Kaltstart eine selektive, katalytische Reduktion von Stickoxiden im Abgas des Verbrennungsmotors erfolgen, wodurch die Stickoxid-Emissionen verringert werden können. Insbesondere ist auch ein Aufheizen einer Abgasnachbehandlungskomponente in einer motorfernen Position, beispielsweise in einer Unterbodenposition eines Kraftfahrzeuges möglich, wodurch zusätzlich Freiheitsgrade bei der Auslegung der Abgasanlage erreicht werden. Dabei ist vorzugsweise die erste Abgasnachbehandlungskomponente zur selektiven, katalytischen Reduktion von Stickoxiden in einer motornahen Position und die zweite Abgasnachbehandlungskomponente zur selektiven, katalytischen Reduktion in einer motorfernen Position angeordnet. Unter einer motornahen Position ist in diesem Zusammenhang eine Position in der Abgasanlage zu verstehen, bei der die einlassseitige Stirnfläche der Abgasnachbehandlungskomponente eine Abgaslauflänge von weniger als 80 cm, vorzugsweise von weniger als 50 cm, ab dem Auslass des Verbrennungsmotors aufweist. Unter einer motorfernen Position ist in diesem Zusammenhang eine Position zu verstehen, bei welcher die Abgaslauflänge ab dem Auslass des Verbrennungsmotors mehr als 100 cm, vorzugsweise mehr als 150 cm beträgt. Durch den räumlichen Abstand der beiden Abgasnachbehandlungskomponenten zur selektiven katalytischen Reduktion von Stickoxiden erreichen diese bei einem Normalbetrieb des Verbrennungsmotors durch die Abwärmeverluste über den Abgaskanal unterschiedliche Betriebstemperaturen. Dadurch kann der Betriebsbereich des Verbrennungsmotor, bei dem wenigstens einer der beiden Abgasnachbehandlungskomponenten zur selektiven, katalytischen Reduktion von Stickoxiden in einem zur Reduktion der Stickoxide notwendigen Temperaturfenster betrieben wird, erweitert werden. Ferner kann der Oxidationskatalysator unabhängig von seiner Einbauposition in der Abgasanlage zeitnah nach einem Kaltstart auf seine Betriebstemperatur aufgeheizt werden. Durch den Abgasbrenner kann ein motornaher Oxidationskatalysator entfallen, wodurch zusätzliche Freiheitsgrade bei der Auslegung der Abgasanlage entstehen. Dies ist insbesondere bei engen Motorräumen vorteilhaft, da der Oxidationskatalysator durch den vorgeschalteten Abgasbrenner auch in einer Unterbodenposition des Kraftfahrzeuges angeordnet werden kann.

Durch die in den abhängigen Ansprüchen aufgeführten Merkmale sind vorteilhafte Ausführungsformen, Verbesserungen und Weiterentwicklungen des im unabhängigen Anspruch angegebenen Abgasnachbehandlungssystems möglich.

In bevorzugter Ausgestaltung der Erfindung ist vorgesehen, dass eine der Abgasnachbehandlungskomponenten zur selektiven, katalytischen Reduktion von Stickoxiden als ein Partikelfilter mit einer Beschichtung zur selektiven, katalytischen Reduktion von Stickoxiden und die jeweils andere Abgasnachbehandlungskomponente als SCR-Katalysator ausgeführt sind. Durch einen Partikelfilter mit einer Beschichtung zur selektiven, katalytischen Reduktion von Stickoxiden kann die Funktionalität eines Partikelfilters mit der Funktionalität eines SCR-Katalysators kombiniert werden. Im Vergleich zu einem SCR-Katalysator ist ein solcher Partikelfilter jedoch in der Herstellung teuer und weist zudem einen höheren Strömungswiderstand auf. Daher stellt eine Kombination aus einem beschichteten Partikelfilter und einem SCR-Katalysator einen bestmöglichen Kompromiss bezüglich der Abgasnachbehandlung, der Kosten und des Strömungswiderstands dar.

In einer bevorzugten Ausführungsform des Abgasnachbehandlungssystems ist vorgesehen, dass der Oxidationskatalysator einen Ammoniak-Sperrkatalysator umfasst. Durch einen Sperrkatalysator kann verhindert werden, dass unverbrauchtes Reduktionsmittel, insbesondere Ammoniak, in die Umwelt emittiert wird. Somit können Sekundäremissionen durch die Dosierelemente zur Eindosierung einer wässrigen Harnstofflösung vermieden werden.

In einer bevorzugten Ausführungsform der Erfindung ist vorgesehen, dass der ersten Abgasnachbehandlungskomponente zur selektiven, katalytischen Reduktion von Stickoxiden ein erstes Dosierelement zur Eindosierung eines Reduktionsmittels, insbesondere einer flüssigen Harnstofflösung, zugeordnet ist. Zusätzlich ist der zweiten Abgasnachbehandlungskomponente zur selektiven, katalytischen Reduktion von Stickoxiden ein zweites Dosierelement zur Eindosierung eines Reduktionsmittels in den Abgaskanal zugeordnet. Durch zwei unabhängige Dosierelemente kann das Reduktionsmittel stets vor derjenigen Abgasnachbehandlungskomponente zur selektiven, katalytischen Reduktion von Stickoxiden eindosiert werden, bei welcher bei dem aktuellen Betriebspunkt des Verbrennungsmotors die effiziente Konvertierung der Stickoxide zu erwarten ist. Alternativ ist es möglich, an beiden Dosierelementen gleichzeitig Reduktionsmittel einzudosieren, um das katalytisch wirksame Volumen von beiden Abgasnachbehandlungskomponenten zur selektiven, katalytischen Reduktion der Stickoxide zu nutzen.

Besonders bevorzugt ist dabei, wenn zwischen dem jeweiligen Dosierelement und der jeweiligen Abgasnachbehandlungskomponente zur selektiven, katalytischen Reduktion von Stickoxiden jeweils ein Abgasmischer angeordnet ist. Durch einen Abgasmischer kann die Durchmischung des Abgasstroms mit dem Reduktionsmittel verbessert werden, wodurch die Mischstrecke zwischen dem Dosierelement und dem Eintritt in die jeweilige Abgasnachbehandlungskomponente zur selektiven, katalytischen Reduktion von Stickoxiden verkürzt werden kann. Durch eine bessere Durchmischung von Abgas und Reduktionsmittel wird ein homogeneres Abgas erreicht, wodurch die Konvertierungsleistung der Abgasnachbehandlungskomponenten verbessert werden kann.

In einer bevorzugten Ausführungsform der Erfindung ist vorgesehen, dass der Brenner stromaufwärts der jeweiligen Mischstrecke und gegebenenfalls auch stromaufwärts des jeweiligen Dosierelements angeordnet ist, um diese Komponenten ebenfalls zu erwärmen, was zusätzlich zu einer verbesserten Verdampfung der wässrigen Harnstofflösung und zu einer verbesserten Durchmischung mit dem Abgas führt. Während der Heizphase mit dem Brenner kann es sinnvoll sein, die Dosierung der wässrigen Harnstofflösung zeitweise, oder vollständig einzustellen, sobald die durch den Brenner aufgeheizte Abgastemperatur ein spontanes Verbrennen des Reduktionsmittels zur Folge hat. Bevorzugt ist in diesem Fall jedoch eine Reduzierung der Heizleistung des Brenners, sodass eine Abgastemperatur von 450°C, bevorzugt von 400°C, besonders bevorzugt von 350°C nicht überschritten wird.

In einer bevorzugten Ausführungsform der Erfindung ist vorgesehen, dass der Brenner eine Leistung von mindestens 8 Kilowatt, vorzugsweise zwischen 8 und 20 Kilowatt, besonders bevorzugt zwischen 10 und 15 Kilowatt, aufweist. Ein wesentlicher Vorteil eines Abgasbrenners liegt in der gegenüber einem elektrischen Heizelement höheren Leistung. Während die Leistung eines elektrischen Heizelements durch den Batteriestrom insbesondere bei einem 12V-Bordnetz, aber auch bei einem 48V-Bordnetz entsprechend begrenzt ist und die Batterie insbesondere bei kalten Außentemperaturen unter 0°C deutlich in ihrer Leistung eingeschränkt ist, kann ein Brenner im Wesentlichen unabhängig von der Außentemperatur und vom Betrieb des Verbrennungsmotors eine hohe Abwärmeleistung erzeugen, mit welcher das Abgas beziehungsweise die im Abgaskanal stromabwärts einer Einleitstelle für die Abgase des Brenners angeordneten Abgaskomponenten aufgeheizt werden können.

Besonders bevorzugt ist dabei, wenn der Brenner mit dem gleichen Kraftstoff wie der Verbrennungsmotor betrieben wird und insbesondere aus einem gemeinsamen Tank mit Brennstoff versorgt wird. Dadurch kann auf einen zusätzlichen Tank für den Brenner sowie gegebenenfalls auch auf eine zusätzliche Förderpumpe zur Brennstoffversorgung des Brenners verzichtet werden. Somit kann der Brenner vergleichsweise einfach und kostengünstig an ein bestehendes Kraftstoffversorgungssystem angeschlossen werden.

Erfindungsgemäß ist vorgesehen, dass die in Strömungsrichtung eines Abgases durch den Abgaskanal erste Abgasnachbehandlungskomponente zur selektiven, katalytischen Reduktion von Stickoxiden als ein Partikelfilter mit einer Beschichtung zur selektiven, katalytischen Reduktion von Stickoxiden und die stromabwärts der ersten Abgasnachbehandlungskomponente zur selektiven, katalytischen Reduktion von Stickoxiden angeordnete zweite Abgasnachbehandlungskomponente zur selektiven, katalytischen Reduktion von Stickoxiden als SCR-Katalysator ausgeführt sind. Dabei wird der Brenner ausschließlich zur Aufheizung des SCR-Katalysators genutzt, wodurch ein Aufheizen weiterer Abgaskomponenten nicht erfolgt und die Abwärme des Brenners bis auf geringe Verluste zum Aufheizen des SCR-Katalysators genutzt werden. Dabei ist die Einleitstelle der heißen Brenngase vorzugsweise stromaufwärts des zweiten Dosierelements vorgesehen, um das Verdampfen des Reduktionsmittels, insbesondere einer wässrigen Harnstofflösung, zu fördern und die Freisetzung des daraus gewonnenen Ammoniaks zu begünstigen. Während der Heizphase mit dem Brenner kann es sinnvoll sein, die Dosierung der wässrigen Harnstofflösung zeitweise, oder vollständig einzustellen, sobald die durch den Brenner aufgeheizte Abgastemperatur ein spontanes Verbrennen des Reduktionsmittels zur Folge hat. Bevorzugt ist in diesem Fall jedoch eine Reduzierung der Heizleistung des Brenners, sodass eine Abgastemperatur von 450°C, bevorzugt 400°C, besonders bevorzugt 350°C nicht überschritten wird.

Alternativ ist in einer nicht zur Erfindung gehörenden Ausführungsform des Abgasnachbehandlungssystems vorgesehen, dass die in Strömungsrichtung eines Abgases durch den Abgaskanal erste Abgasnachbehandlungskomponente zur selektiven, katalytischen Reduktion von Stickoxiden als SCR-Katalysator und die stromabwärts der ersten Abgasnachbehandlungskomponente angeordnete zweite Abgasnachbehandlungskomponente zur selektiven, katalytischen Reduktion von Stickoxiden ein Partikelfilter mit einer Beschichtung zur selektiven, katalytischen Reduktion von Stickoxiden sind. Dabei kann der Brenner zusätzlich genutzt werden, um den Partikelfilter auf seine Regenerationstemperatur aufzuheizen. Somit kann eine Regeneration des Partikelfilters unabhängig vom Betriebszustand des Verbrennungsmotors eingeleitet werden, wobei auf innermotorische Maßnahmen zur Anhebung der Abgastemperatur verzichtet werden kann. Dadurch kann das Brennverfahren optimal gestaltet werden und es können der Kraftstoffverbrauch und/oder die Rohemissionen des Verbrennungsmotors reduziert werden, wodurch eine im Wesentlichen emissionsneutrale Regeneration des Partikelfilters möglich ist. Ferner kann die Regeneration ohne Einfluss auf die Leistungsabgabe des Verbrennungsmotors durchgeführt werden, sodass eine Regeneration des Partikelfilters ohne Komfort- oder Leistungseinbußen für den Fahrer durchgeführt werden kann.

Bevorzugt ist dabei, dass stromabwärts des Partikelfilters an einer Verzweigung eine Niederdruck-Abgasrückführung aus dem Abgaskanal abzweigt, welche den Abgaskanal mit dem Ansaugtrakt des Verbrennungsmotors stromaufwärts eines Verdichters eines Abgasturboladers verbindet. Durch eine Abgasrückführung stromabwärts des Partikelfilters wird sichergestellt, dass das über die Niederdruck-Abgasrückführung zurückgeführte Abgas im Wesentlichen frei von Partikeln und Verunreinigungen ist. Somit kann sichergestellt werden, dass das zurückgeführte Abgas zu keiner Beschädigung an dem Verdichter des Abgasturboladers oder in den Brennräumen des Verbrennungsmotors führt.

Bevorzugt ist dabei, wenn der Brenner stromabwärts des Partikelfilters und stromabwärts der Verzweigung für die Niederdruck-Abgasrückführung sowie stromaufwärts des zweiten SCR-Katalysators angeordnet sind. Dadurch wird verhindert, dass ein Teil der Abwärme des Brenners über die Niederdruck-Abgasrückführung verloren geht und nicht für die Aufheizung des SCR-Katalysators zur Verfügung steht.

In einer vorteilhaften Verbesserung des Abgasnachbehandlungssystems ist vorgesehen, dass in der Abgasanlage mindestens ein Temperatursensor, ein NOx-Sensor und/oder ein Drucksensor angeordnet ist. Durch einen Temperatursensor kann die Wärmeeinbringung über den Brenner geregelt werden, sodass gerade so viel Energie in den Abgasstrom eingebracht wird, wie zum Erreichen der Betriebstemperatur der Abgasnachbehandlungskomponenten notwendig ist. Ferner kann der Brenner abgeschaltet werden, wenn diese Temperatur überschritten wird. Somit kann der Mehrverbrauch durch den Brenner minimiert werden. Durch einen NOx-Sensor kann die Menge des eindosierten Reduktionsmittels geregelt werden, um einen möglichst effizienten Einsatz von Reduktionsmittel zu gewährleisten.

Erfindungsgemäß wird ein Verfahren zur Abgasnachbehandlung eines Verbrennungsmotors mit einem erfindungsgemäßen Abgasnachbehandlungssystem vorgeschlagen, bei welchem eine Temperatur in der Abgasanlage, insbesondere eine Abgastemperatur stromabwärts der durch den Brenner beheizten Abgasnachbehandlungskomponente zur selektiven, katalytischen Reduktion von Stickoxiden, oder die Temperatur einer Abgasnachbehandlungskomponente, insbesondere einer Abgasnachbehandlungskomponente zur selektiven, katalytischen Reduktion von Stickoxiden, ermittelt wird und diese Temperatur mit einer Schwellentemperatur verglichen wird. Dabei wird der Brenner aktiviert, wenn die ermittelte Temperatur unterhalb der Schwellentemperatur liegt. Durch das vorgeschlagene Verfahren ist ein Aufheizen zumindest eines SCR-Katalysators unmittelbar nach dem Kaltstart des Verbrennungsmotors möglich, wobei durch die im Vergleich zu elektrischen Heizelementen hohe Heizleistung deutlich schneller die Betriebstemperatur des SCR-Katalysators erreicht wird. Dadurch können die NOx-Emissionen, insbesondere in der Kaltstartphase, aber auch nach längeren Leerlauf- oder Schwachlastphasen, in denen der SCR-Katalysator ansonsten unter seine Betriebstemperatur auskühlt, verringert werden.

In einer weiteren Verbesserung des Verfahrens ist vorgesehen, dass der Brenner wieder deaktiviert wird, wenn die ermittelte Temperatur oberhalb einer zweiten Schwellentemperatur liegt. Dabei können die erste Schwellentemperatur und die zweite Schwellentemperatur gleich sein. Bevorzugt ist jedoch, dass die zweite Schwellentemperatur oberhalb der ersten Schwellentemperatur, vorzugsweise 50°C - 150°C, besonders bevorzugt 100°C - 150°C oberhalb der ersten Schwellentemperatur liegt. Durch ein Abschalten des Brenners oberhalb der zweiten Schwellentemperatur kann der Mehrverbrauch durch den Brenner reduziert werden. Dabei bleibt der Brenner vorzugsweise solange aktiviert, bis der SCR-Katalysator stromabwärts des Brenners eine Temperatur erreicht hat, bei welcher eine maximal-effiziente Konvertierung von Stickoxiden erreicht wird.

In einer weiteren Verbesserung des Verfahrens ist mit Vorteil vorgesehen, dass nach einem definierten Zeitintervall die Leistung des Brenners reduziert wird, oder der Brenner deaktiviert wird. Dadurch kann verhindert werden, dass es durch einen unkontrollierten und übermäßigen Wärmeeintrag in die Abgasanlage zu einer thermischen Schädigung von Sensoren und/oder Abgasnachbehandlungskomponenten kommt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: eine schematische Darstellung eines Verbrennungsmotors, welcher mit seinem Auslass mit einer Abgasanlage und mit seinem Einlass mit einem Luftversorgungssystem verbunden ist;
- Figur 2: eine weitere schematische Darstellung eines Verbrennungsmotors mit einem Luftversorgungssystem und einem alternativen, nicht zur Erfindung gehörenden Abgasnachbehandlungssystem; und
- Figur 3: ein Ablaufdiagramm zur Durchführung eines erfindungsgemäßen Verfahrens zur Abgasnachbehandlung eines Verbrennungsmotors.

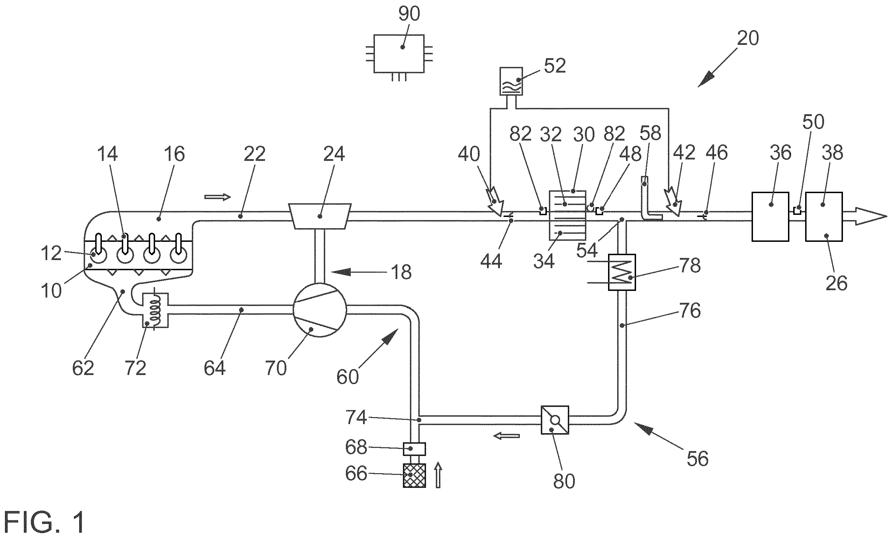

Figur 1 zeigt die schematische Darstellung eines Verbrennungsmotors 10 mit einem Luftversorgungssystem 60 und einer Abgasanlage 20. Der Verbrennungsmotor 10 ist in diesem Ausführungsbeispiel ein direkteinspritzender Dieselmotor und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 ist mit seinem Einlass 62 mit einem Luftversorgungssystem 60 und mit seinem Auslass 16 mit einer Abgasanlage 20 verbunden. Der Verbrennungsmotor 10 kann eine nicht dargestellte Hochdruck-Abgasrückführung mit einem Hochdruck-Abgasrückführungsventil aufweisen, über welches ein Abgas des Verbrennungsmotors 10 von dem Auslass 16 zum Einlass 62 zurückgeführt werden kann. An den Brennräumen 12 sind Einlassventile und Auslassventile angeordnet, mit welchen eine fluidische Verbindung vom Luftversorgungssystem 60 zu den Brennräumen 12 oder von den Brennräumen 12 zur Abgasanlage 20 geöffnet oder verschlossen werden kann.

Das Luftversorgungssystem 60 umfasst einen Ansaugkanal 64, in welcher in Strömungsrichtung von Frischluft durch den Ansaugkanal 64 ein Luftfilter 66, stromabwärts des Luftfilters 66 ein Luftmassenmesser 68, insbesondere ein Heißfilmluftmassenmesser, stromabwärts des Luftmassenmessers 68 ein Verdichter 70 eines Abgasturboladers 18 und weiter stromabwärts ein Ladeluftkühler 72 angeordnet sind. Dabei kann der Luftmassenmesser 68 auch in einem Filtergehäuse des Luftfilters 66 angeordnet sein, sodass der Luftfilter 66 und der Luftmassenmesser 68 eine Baugruppe ausbildet. Stromabwärts des Luftfilters 68 und stromaufwärts des Verdichters 70 ist eine Einmündung 74 vorgesehen, an welcher eine Abgasrückführungsleitung 76 einer Niederdruck-Abgasrückführung 56 in den Ansaugkanal 64 mündet.

Die Abgasanlage 20 umfasst einen Abgaskanal 22, in welchem in Strömungsrichtung eines Abgases des Verbrennungsmotors 10 durch den Abgaskanal 22 eine Turbine 24 des Abgasturboladers 18 angeordnet ist, welche den Verdichter 70 im Luftversorgungssystem 60 über eine Welle antreibt. Der Abgasturbolader 18 ist vorzugsweise als Abgasturbolader 18 mit variabler Turbinengeometrie ausgeführt. Dazu sind einem Turbinenrad der Turbine 24 verstellbare Leitschaufeln vorgeschaltet, über welche die Anströmung des Abgases auf die Schaufeln der Turbine 24 variiert werden kann. Stromabwärts der Turbine 24 sind mehrere Abgasnachbehandlungskomponenten 26, 30, 32, 34, 36, 38 angeordnet. Dabei ist unmittelbar stromabwärts der Turbine 24 als erste Komponente der Abgasnachbehandlung eine erste Abgasnachbehandlungskomponente 30 zur selektiven, katalytischen Reduktion von Stickoxiden angeordnet. Diese erste Abgasnachbehandlungskomponente 30 ist als ein Partikelfilter 32 mit einer Beschichtung 34 zur selektiven katalytischen Reduktion von Stickoxiden (SCR-Beschichtung) ausgeführt. Stromabwärts dieser ersten Abgasnachbehandlungskomponente 30 sind ein zweiter SCR-Katalysator 36 und weiter stromabwärts ein Oxidationskatalysator 26 zur Konvertierung von unverbrannten Kohlenwasserstoffen und Kohlenstoffmonoxid vorgesehen. Ferner kann der Oxidationskatalysator 26 einen Ammoniak-Sperrkatalysator 38 umfassen, welcher einen Austritt von unverbrauchtem Ammoniak verhindert. Stromabwärts der Turbine 24 und stromaufwärts des Partikelfilters 32 ist ein erstes Dosierelement 40 vorgesehen, mit welchem ein Reduktionsmittel 52, insbesondere wässrige Harnstofflösung, in den Abgaskanal 22 des Verbrennungsmotors 10 eindosiert werden kann. Stromabwärts des ersten Dosierelements 40 und stromaufwärts des Partikelfilters 32 kann ein erster Abgasmischer angeordnet sein, um die Vermischung des Reduktionsmittels 52 mit dem Abgasstrom des Verbrennungsmotors 10 vor Eintritt in den Partikelfilter 32 zu verbessern.

Stromabwärts des Partikelfilters 32 und stromaufwärts des zweiten SCR-Katalysators 36 ist am Abgaskanal 22 eine Verzweigung 54 vorgesehen, an welcher eine Niederdruck-Abgasrückführung 56 aus dem Abgaskanal 22 abzweigt und diesen mit dem Ansaugkanal 64 stromaufwärts des Verdichters 70 verbindet. Die Niederdruck-Abgasrückführung 56 umfasst neben der Abgasrückführungsleitung 76 einen Abgasrückführungskühler 78 und ein Abgasrückführungsventil 80, über welches die Abgasrückführung durch die Abgasrückführungsleitung 76 steuerbar ist. An der Abgasrückführungsleitung 76 der Niederdruck-Abgasrückführung 56 kann ein Temperatursensor 48 vorgesehen sein, über welchen eine Abgastemperatur in der Niederdruck-Abgasrückführung 56 ermittelt werden kann, um die Abgasrückführung 56 zu aktivieren, sobald die Abgastemperatur in der Abgasrückführung 56 einen definierten Schwellenwert überschritten hat. Somit kann verhindert werden, dass Wasserdampf oder im Abgas enthaltenes Reduktionsmittel 52 zur selektiven katalytischen Reduktion von Stickoxiden, insbesondere flüssige Harnstofflösung, auskondensiert und in der Niederdruck-Abgasrückführung 56 oder im Luftversorgungssystem 60 zu Beschädigungen oder Ablagerungen führt.

In der Abgasanlage 20 ist stromabwärts der Verzweigung 54 ein Brenner 58 vorgesehen, mit welchem der Abgasstrom des Verbrennungsmotors 10 vor Eintritt in den zweiten SCR-Katalysator 38 erhitzt werden kann. Stromabwärts des Brenners 58 und stromaufwärts des zweiten SCR-Katalysators ist ein zweites Dosierelement 42 zur Eindosierung des Reduktionsmittels 52 vorgesehen, welchem ein zweiter Abgasmischer 46 nachgeschaltet sein kann. Ferner können im Abgaskanal 22 ein Temperatursensor 48 und/oder ein NOx-Sensor 50 angeordnet sein, um die Abgastemperatur des Verbrennungsmotors 10 oder die Stickoxidkonzentration im Abgas zu ermitteln und das Reduktionsmittel bedarfsgerecht durch mindestens eines der Dosierelemente 40, 42 einzudosieren. Ferner sind in der Abgasanlage 20 Differenzdrucksensoren 82 vorgesehen, um eine Druckdifferenz über dem Partikelfilter 32 zu bestimmen. Auf diese Weise kann der Beladungszustand des Partikelfilters 32 ermittelt und bei Überschreiten eines definierten Beladungsniveaus eine Regeneration des Partikelfilters 32 eingeleitet werden.

Der Verbrennungsmotor 10 ist mit einem Motorsteuergerät 90 verbunden, welches über nicht dargestellte Signalleitungen mit einem Temperatursensor 48, einem NOx-Sensor 50, einem Differenzdrucksensor 82, mit den Kraftstoffinjektoren 14 des Verbrennungsmotors 10 sowie mit den Dosierelementen 40, 42 und dem Brenner 58 verbunden ist.

Die Einspritzmenge sowie der Einspritzzeitpunkt des Kraftstoffs in die Brennräume 12 des Verbrennungsmotors 10 sowie die Eindosierung eines Reduktionsmittels 52 zur selektiven katalytischen Reduktion von Stickoxiden in den Abgaskanal 22 werden durch dieses Motorsteuergerät 90 gesteuert. Ferner wird der Brenner 58 aktiviert, wenn die Abgastemperatur oder eine Bauteiltemperatur einer Abgasnachbehandlungskomponente 30, 32, 34, 36 zur selektiven, katalytischen Reduktion von Stickoxiden unterhalb einer Schwellentemperatur Ts liegt. Durch den Oxidationskatalysator 26 können unverbrannte Kohlenwasserstoffe und Kohlenstoffmonoxid in Kohlenstoffdioxid und Wasserdampf konvertiert werden. Der Sperrkatalysator 38 verhindert bei einer Überdosierung von wässriger Harnstofflösung durch eines der Dosierelemente 40, 42 einen Austritt von Ammoniak, um die Emissionen zu verringern.

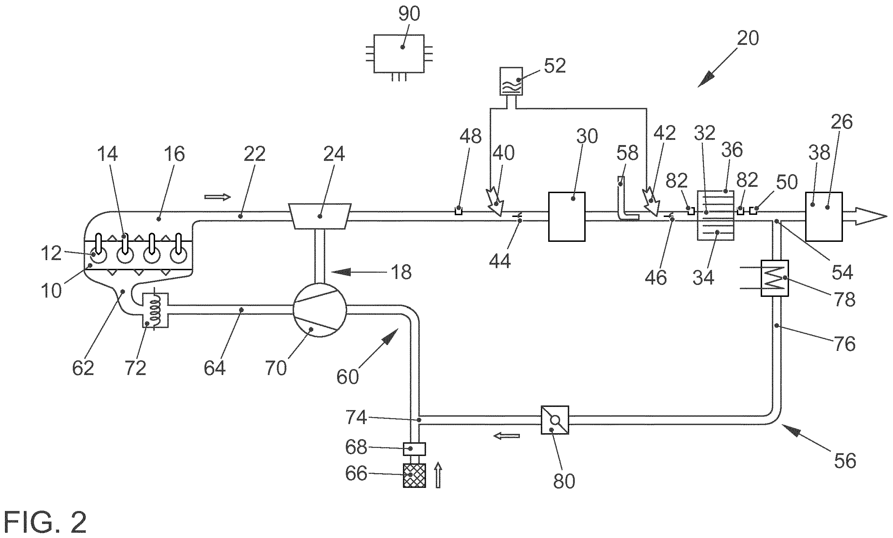

In Figur 2 ist ein nicht zur Erfindung gehörendes alternatives Ausführungsbeispiel eines Abgasnachbehandlungssystem für einen Verbrennungsmotor 10 dargestellt. Bei im Wesentlichen gleichem Aufbau wie zu Figur 1 ausgeführt, wird im Nachfolgenden nur auf die Unterschiede zu der in Figur 1 dargestellten Ausführungsform eingegangen. In der Abgasanlage 20 ist stromabwärts der Turbine 24 eines Abgasturboladers 18 als erste Abgasnachbehandlungskomponente 30 zur selektiven, katalytischen Reduktion ein SCR-Katalysator 30 vorgesehen. Stromabwärts des SCR-Katalysators 30 ist als zweite Abgasnachbehandlungskomponente 36 zur selektiven, katalytischen Reduktion ein Partikelfilter 32 mit einer Beschichtung 34 zur selektiven, katalytischen Reduktion von Stickoxiden angeordnet. Dabei ist der Brenner 58 stromabwärts des SCR-Katalysators 30 und stromaufwärts des zweiten Dosierelements 42 zur Eindosierung des Reduktionsmittels 52 für eine selektive, katalytische Reduktion von Stickoxiden auf dem beschichteten Partikelfilter 32 angeordnet. Die Niederdruck-Abgasrückführung 56 zweigt in diesem Ausführungsbeispiel erst hinter der zweiten Abgasnachbehandlungskomponente 36 zur selektiven, katalytischen Reduktion von Stickoxiden, nämlich stromabwärts des Partikelfilters 32 mit der Beschichtung 34 zur selektiven, katalytischen Reduktion stromaufwärts des Sperrkatalysators 38, aus dem Abgaskanal 22 ab. Dabei können eventuell auftretende Rußemissionen des Brenners 58 durch den Partikelfilter 32 gereinigt werden, sodass der Betrieb des Brenners 58 nicht zu einem Anstieg der Rußemissionen führt. Durch den Abgasbrenner 58 kann der Oxidationskatalysator 26 insbesondere nach einem Kaltstart des Verbrennungsmotors 10 zeitnah auf seine Betriebstemperatur aufgeheizt werden. Somit kann der Oxidationskatalysator 26 quasi an beliebigen Positionen in der Abgasanlage 20 angeordnet werden. Ferner besteht durch die Anordnung des Brenners 58 stromaufwärts des Partikelfilters 32 die Möglichkeit, die Regeneration des Partikelfilters 32, also die Oxidation der im Partikelfilter 32 zurückgehaltenen Rußpartikel, unabhängig vom Betriebspunkt des Verbrennungsmotors 10 durch den Brenner 58 einzuleiten. Da die Regenerationstemperatur des Partikelfilters 32 oberhalb des Temperaturfensters liegt, bei dem eine effiziente Konvertierung der Stickoxide durch die selektive, katalytische Reduktion möglich ist, sollte der Brenner 58 bei dieser Ausführungsvariante eine höhere Leistung, insbesondere eine Leistung zwischen 15 Kilowatt und 25 Kilowatt, aufweisen.

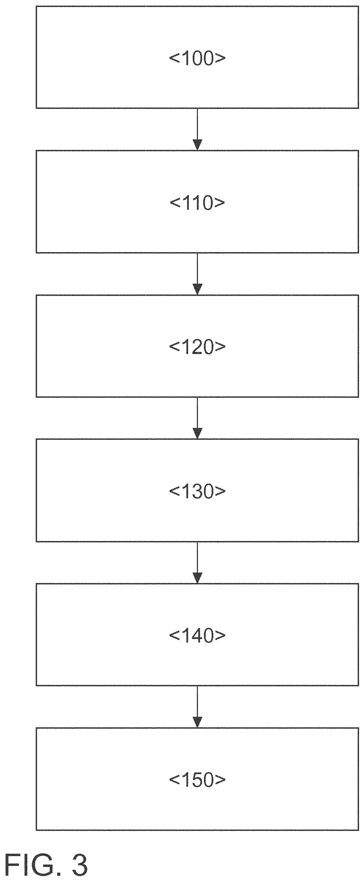

In Figur 3 ist ein Ablaufdiagramm zur Durchführung eines erfindungsgemäßen Verfahrens zur Abgasnachbehandlung eines Verbrennungsmotors 10 dargestellt. Dabei wird in einem ersten Verfahrensschritt <100> eine Temperatur T_{EG} in der Abgasanlage 20 des Verbrennungsmotors 10 ermittelt. Die kann die Abgastemperatur des Verbrennungsmotors 10 oder die Temperatur einer Abgasnachbehandlungskomponente 26, 30, 32, 34, 36, 38, insbesondere einer Abgasnachbehandlungskomponente 30, 32, 34, 36 zur selektiven, katalytischen Reduktion von Stickoxiden, ermitteln. In einem zweiten Verfahrensschritt <110> wird die ermittelte Temperatur T_{EG} mit einer Schwellentemperatur Ts verglichen. Liegt die Temperatur T_{EG} unterhalb der Schwellentemperatur T_{S}, so wird in einem Verfahrensschritt <120> der Brenner 58 aktiviert und der Abgasstrom des Verbrennungsmotors 10 durch den Brenner 58 erhitzt. Das auf diese Art und Weise erhitzte Abgas tritt in die in Strömungsrichtung zweite Abgasnachbehandlungskomponente 36 zur selektiven, katalytischen Reduktion ein, sodass diese zweite Abgasnachbehandlungskomponente 36 zeitnah ihre Betriebstemperatur erreicht. Ist diese Betriebstemperatur erreicht, so wird in einem Verfahrensschritt <130> durch das zweite Dosierelement 42 Reduktionmittel 52 in den Abgaskanal 22 eindosiert, wobei die Stickoxide mit dem Reduktionsmittel 52 zu molekularem Stickstoff reduziert werden. Durch den Betrieb des Verbrennungsmotors 10 werden sämtliche Abgasnachbehandlungskomponenten 26, 30, 32, 34, 36, 38 im Abgaskanal 22 aufgeheizt. Hat die in Strömungsrichtung des Abgases des Verbrennungsmotors 10 erste Abgasnachbehandlungskomponente 30 zur selektiven, katalytischen Reduktion von Stickoxiden ihre Betriebstemperatur erreicht, so kann der Brenner 58 in einem Verfahrensschritt <140> abgeschaltet werden und die Eindosierung des Reduktionsmittels 52 in einem Verfahrensschritt <150> auf das erste Dosierelement 40 umgeschaltet werden. Alternativ kann der Brenner 58 auch zeitgesteuert betrieben werden und in seiner Leistung reduziert beziehungsweise abgeschaltet werden, wenn ein definiertes Zeitintervall verstrichen ist.

Durch ein erfindungsgemäßes Abgasnachbehandlungssystem können die Stickoxidemissionen, die insbesondere nach einem Kaltstart des Verbrennungsmotors 10 oder nach einem Betrieb in einer Leerlauf- oder Schwachlastphase aufgeheizt werden, verringert werden. Dabei kann die selektive, katalytische Reduktion von Stickoxiden im Wesentlichen unabhängig vom Betriebspunkt des Verbrennungsmotors 10 durchgeführt werden. Somit werden hohe Wirkungsgrade in der Konvertierung von Stickoxiden unabhängig vom Betriebspunkt des Verbrennungsmotors 10 und der Position in der Abgasanlage 20 erreicht. Dadurch ergibt sich die Möglichkeit, die SCR-Katalysatoren 30, 36 an nahezu beliebigen Positionen in der Abgasanlage anzuordnen.

### Bezugszeichenliste

- 10: Verbrennungsmotor
- 12: Brennraum
- 14: Kraftstoffinjektor
- 16: Auslass
- 18: Abgasturbolader

- 20: Abgasanlage
- 22: Abgaskanal
- 24: Turbine
- 26: Oxidationskatalysator

- 30: erster SCR-Katalysator
- 32: Partikelfilter
- 34: SCR-Beschichtung
- 36: zweiter SCR-Katalysator
- 38: Sperrkatalysator

- 40: erstes Dosierelement
- 42: zweites Dosierelement
- 44: erster Abgasmischer
- 46: zweiter Abgasmischer
- 48: Temperatursensor

- 50: NOx-Sensor
- 52: Reduktionsmittel
- 54: Verzweigung
- 56: Niederdruck-Abgasrückführung
- 58: Brenner

- 60: Luftversorgungssystem
- 62: Einlass
- 64: Ansaugkanal
- 66: Motorsteuergerät
- 68: Luftmassenmesser

- 70: Verdichter
- 72: Ladeluftkühler
- 74: Einmündung
- 76: Abgasrückführungsleitung
- 78: Abgasrückführungskühler

- 80: Abgasrückführungsventil
- 82: Differenzdrucksensor

- 90: Motorsteuergerät

## Patentansprüche

1. Abgasnachbehandlungssystem für einen Verbrennungsmotor (10), umfassend eine Abgasanlage (20) mit einem Abgaskanal (22), in welchem mindestens zwei Abgasnachbehandlungskomponenten (30, 36) zur selektiven, katalytischen Reduktion von Stickoxiden angeordnet sind, wobei die erste Abgasnachbehandlungskomponente (30) zur selektiven, katalytischen Reduktion von Stickoxiden unmittelbar stromabwärts einer Turbine (24) eines Abgasturboladers (18) angeordnet ist und stromabwärts der ersten Abgasnachbehandlungskomponente (30) zur selektiven, katalytischen Reduktion von Stickoxiden und stromaufwärts der zweiten Abgasnachbehandlungskomponente (36) zur selektiven, katalytischen Reduktion von Stickoxiden ein Brenner (58) vorgesehen ist, mit welchem das Abgas vor Eintritt in die zweite Abgasnachbehandlungskomponente (36) zur selektiven, katalytischen Reduktion von Stickoxiden beheizbar ist, wobei stromabwärts der zweiten Abgasnachbehandlungskomponente (36) zur selektiven, katalytischen Reduktion von Stickoxiden ein Oxidationskatalysator (26) zur Konvertierung unverbrannter Kohlenwasserstoffe angeordnet ist, **dadurch gekennzeichnet, dass** die erste Abgasnachbehandlungskomponente (30) ein Partikelfilter (32) mit einer Beschichtung (34) zur selektiven, katalytischen Reduktion von Stickoxiden und die zweite Abgasnachbehandlungskomponente (36) ein SCR-Katalysator ist.

2. Abgasnachbehandlungssystem nach Anspruch 1, **dadurch gekennzeichnet, dass** eine der Abgasnachbehandlungskomponenten (30, 36) als Partikelfilter (32) mit einer Beschichtung (34) zur selektiven, katalytischen Reduktion von Stickoxiden und die jeweils andere Abgasnachbehandlungskomponente (30, 36) als SCR-Katalysator ausgeführt sind.

3. Abgasnachbehandlungssystem nach Anspruch 1 oder 2, **dadurch gekennzeichnet, dass** der Oxidationskatalysator (26) einen Ammoniak-Sperrkatalysator (38) umfasst.

4. Abgasnachbehandlungssystem nach einem der Ansprüche 1 bis 3, **dadurch gekennzeichnet, dass** der ersten Abgasnachbehandlungskomponente (30) ein erstes Dosierelement (40) und der zweiten Abgasnachbehandlungskomponente (36) ein zweites Dosierelement (42) zur Eindosierung eines Reduktionsmittels in den Abgaskanal (22) zugeordnet sind.

5. Abgasnachbehandlungssystem nach einem der Ansprüche 1 bis 4, **dadurch gekennzeichnet, dass** der Brenner (58) eine Leistung von mindestens 8 Kilowatt aufweist.

6. Abgasnachbehandlungssystem nach Anspruch 1 bis 5, **dadurch gekennzeichnet, dass** stromabwärts des Partikelfilters (32) an einer Verzweigung (54) eine Niederdruck-Abgasrückführung (56) aus dem Abgaskanal (22) abzweigt.

7. Abgasnachbehandlungssystem nach Anspruch 6, **dadurch gekennzeichnet, dass** der Brenner (58) stromabwärts des Partikelfilters (32) und stromabwärts der Verzweigung (54) sowie stromaufwärts des zweiten SCR-Katalysators (36) angeordnet ist.

8. Verfahren zur Abgasnachbehandlung eines Verbrennungsmotors (10) mit einem Abgasnachbehandlungssystem nach einem der Ansprüche 1 bis 7, **dadurch gekennzeichnet, dass** eine Temperatur (T_{EG}) in der Abgasanlage (20) ermittelt wird, die ermittelte Temperatur (T_{EG}) mit einer Schwellentemperatur (Ts) verglichen wird, und der Brenner (58) aktiviert wird, wenn die ermittelte Temperatur (T_{EG}) unterhalb der Schwellentemperatur (Ts) liegt.

## Claims

1. Exhaust-gas-aftertreatment system for an internal combustion engine (10), comprising an exhaust-gas system (20) with an exhaust-gas channel (22) in which at least two exhaust-gas-aftertreatment components (30, 36) for selective catalytic reduction of nitrogen oxides are arranged, wherein the first exhaust-gas-aftertreatment component (30) for selective catalytic reduction of nitrogen oxides is arranged directly downstream of a turbine (24) of an exhaust-gas turbocharger (18) and, downstream of the first exhaust-gas-aftertreatment component (30) for selective catalytic reduction of nitrogen oxides and upstream of the second exhaust-gas-aftertreatment component (36) for selective catalytic reduction of nitrogen oxides, there is provided a burner (58) by way of which the exhaust gas is heatable prior to entering the second exhaust-gas-aftertreatment component (36) for selective catalytic reduction of nitrogen oxides, wherein, downstream of the second exhaust-gas-aftertreatment component (36) for selective catalytic reduction of nitrogen oxides, there is arranged an oxidation catalytic converter(26) for conversion of unburned hydrocarbons, **characterized in that** the first exhaust-gas-aftertreatment component (30) is a particle filter (32) with a coating (34) for selective catalytic reduction of nitrogen oxides, and the second exhaust-gas-aftertreatment component (36) is an SCR catalytic converter.

2. Exhaust-gas-aftertreatment system according to Claim 1, **characterized in that** one of the exhaust-gas-aftertreatment components (30, 36) is designed as a particle filter (32) with a coating (34) for selective catalytic reduction of nitrogen oxides, and the in each case other exhaust-gas-aftertreatment component (30, 36) is designed as an SCR catalytic converter.

3. Exhaust-gas-aftertreatment system according to Claim 1 or 2, **characterized in that** the oxidation catalytic converter (26) comprises an ammonia-blocking catalytic converter (38).

4. Exhaust-gas-aftertreatment system according to one of Claims 1 to 3, **characterized in that** the first exhaust-gas-aftertreatment component (30) is assigned a first dosing element (40), and the second exhaust-gas-aftertreatment component (36) is assigned a second dosing element (42), for dosing a reducing agent into the exhaust-gas channel (22).

5. Exhaust-gas-aftertreatment system according to one of Claims 1 to 4, **characterized in that** the burner (58) has a power of at least 8 kilowatts.

6. Exhaust-gas-aftertreatment system according to one of Claims 1 to 5, **characterized in that**, downstream of the particle filter (32), a low-pressure exhaust-gas-recirculation arrangement (56) branches off from the exhaust-gas channel (22) at a branch (54).

7. Exhaust-gas-aftertreatment system according to Claim 6, **characterized in that** the burner (58) is arranged downstream of the particle filter (32) and downstream of the branch (54) and also upstream of second SCR catalytic converter (36).

8. Method for exhaust-gas aftertreatment of an internal combustion engine (10) by way of an exhaust-gas-aftertreatment system according to one of Claims 1 to 7, **characterized in that** a temperature (T_{EG}) in the exhaust-gas system (20) is determined, the determined temperature (T_{EG}) is compared with a threshold temperature (T_{S}), and the burner (58) is activated if the determined temperature (T_{EG}) is below the threshold temperature (T_{S}).

## Revendications

1. Système de post-traitement des gaz d'échappement pour un moteur à combustion interne (10), comprenant une installation de gaz d'échappement (20) équipée d'un canal de gaz d'échappement (22), dans lequel sont disposés au moins deux composants de post-traitement des gaz d'échappement (30, 36) pour la réduction sélective catalytique d'oxydes d'azote, dans lequel le premier composant de post-traitement des gaz d'échappement (30) servant pour la réduction sélective catalytique d'oxydes d'azote est disposé directement en aval d'une turbine (24) d'un turbocompresseur de gaz d'échappement (18) et en aval du premier composant de post-traitement des gaz d'échappement (30) pour la réduction sélective catalytique d'oxydes d'azote et qu'un brûleur (58) est prévu en amont du deuxième composant de post-traitement des gaz d'échappement (36) pour la réduction sélective catalytique d'oxydes d'azote, ledit brûleur pouvant chauffer le gaz d'échappement avant l'entrée dans le deuxième composant de post-traitement des gaz d'échappement (36) pour la réduction sélective catalytique d'oxydes d'azote, dans lequel un catalyseur d'oxydation (26) est disposé en aval du deuxième composant de post-traitement des gaz d'échappement (36) pour la réduction sélective catalytique d'oxydes d'azote en vue de convertir les hydrocarbures non consumés, **caractérisé en ce que** le premier composant de post-traitement des gaz d'échappement (30) est un filtre à particules (32) avec un revêtement (34) pour la réduction sélective catalytique d'oxydes d'azote et que le deuxième composant de post-traitement des gaz d'échappement (36) est un catalyseur SCR.

2. Système de post-traitement des gaz d'échappement selon la revendication 1, **caractérisé en ce qu'**un des composants de post-traitement des gaz d'échappement (30, 36) est réalisé sous la forme d'un filtre à particules (32) avec un revêtement (34) servant pour la réduction sélective catalytique d'oxydes d'azote et que le respectivement autre composant de post-traitement des gaz d'échappement (30, 36) est réalisé sous la forme d'un catalyseur SCR.

3. Système de post-traitement des gaz d'échappement selon la revendication 1 ou 2, **caractérisé en ce que** le catalyseur d'oxydation (26) comprend un catalyseur de blocage d'ammoniaque (38).

4. Système de post-traitement des gaz d'échappement selon l'une quelconque des revendications 1 à 3, **caractérisé en ce qu'**un premier élément de dosage (40) est associé au premier composant de post-traitement des gaz d'échappement (30) et qu'un deuxième élément de dosage (42) est associé au deuxième composant de post-traitement des gaz d'échappement (36) pour le dosage d'un agent de réduction dans le canal de gaz d'échappement (22) .

5. Système de post-traitement des gaz d'échappement selon l'une quelconque des revendications 1 à 4, **caractérisé en ce que** le brûleur (58) a une puissance d'au moins 8 kilowatts.

6. Système de post-traitement des gaz d'échappement selon la revendication 1 à 5, **caractérisé en ce que** qu'un retour de gaz d'échappement à basse pression (56) provenant du canal de gaz d'échappement (22) se subdivise en aval du filtre à particules (32) au niveau d'une ramification (54).

7. Système de post-traitement des gaz d'échappement selon la revendication 6, **caractérisé en ce que** le brûleur (58) est disposé en aval du filtre à particules (32) et en aval de la ramification (54) ainsi qu'en amont du deuxième catalyseur SCR (36).

8. Procédé de post-traitement des gaz d'échappement d'un moteur à combustion interne (10) équipé d'un système de post-traitement des gaz d'échappement selon l'une quelconque des revendications 1 à 7, **caractérisé en ce qu'**une température (T_{EG}) est déterminée dans l'installation de gaz d'échappement (20), ladite température déterminée (T_{EG}) étant comparée à une température seuil (Tₛ) et le brûleur (58) étant activé lorsque la température déterminé (T_{EG}) se situe en dessous de la température seuil (Tₛ).
